(19) Europäisches Patentamt
European Patent Office
Office européen des brevets

(11) **EP 1 138 716 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.[7]: **C08J 5/18**, C08L 67/02

(21) Anmeldenummer: **01105742.9**

(22) Anmeldetag: **08.03.2001**

(54) **Biaxal orientierte Polyesterfolie enthaltend ein Cycloolefincopolymer, Verfahren zu ihrer Herstellung und ihre Verwendung**

Biaxially oriented polyester film containing a cycloolefincopolymer, its preparation and use

Film en polyester à orientation biaxiale contenant une polyoléfine cyclique, sa fabrication et utilisation

(84) Benannte Vertragsstaaten:
**DE FR GB IT LU**

(30) Priorität: **13.03.2000 DE 10012137**

(43) Veröffentlichungstag der Anmeldung:
**04.10.2001 Patentblatt 2001/40**

(73) Patentinhaber: **Mitsubishi Polyester Film GmbH
65203 Wiesbaden (DE)**

(72) Erfinder:
- **Peiffer, Herbert, Dr.
55126 Mainz (DE)**
- **Hilkert, Gottfried, Dr.
55291 Saulheim (DE)**
- **Jannsens, Bart, Dr.
65187 Wiesbaden (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**EP-A- 0 522 758**
**EP-A- 0 812 874**
**EP-A- 1 068 949**

- **PATENT ABSTRACTS OF JAPAN vol. 017, no. 516 (C-1112), 17. September 1993 (1993-09-17) & JP 05 140349 A (UNITIKA LTD), 8. Juni 1993 (1993-06-08)**
- **PATENT ABSTRACTS OF JAPAN vol. 1999, no. 05, 31. Mai 1999 (1999-05-31) & JP 11 035717 A (OJI YUKA SYNTHETIC PAPER CO LTD;MITSUBISHI CHEM CORP), 9. Februar 1999 (1999-02-09)**
- **PATENT ABSTRACTS OF JAPAN vol. 1998, no. 08, 30. Juni 1998 (1998-06-30) & JP 10 060143 A (TOYOBO CO LTD), 3. März 1998 (1998-03-03)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine milchig durchscheinende, biaxial orientierte Polyesterfolie, die mindestens eine Schicht umfaßt, welche einen Polyesterrohstoff und ein Cycloolefincopolymer (COC) enthält. Die Erfindung betrifft ferner ein Verfahren zur Herstellung der Polyesterfolie sowie ihre Verwendung.

Milchige, biaxial orientierte Polyesterfolien sind nach dem Stand der Technik bekannt. Diese nach dem Stand der Technik bekannten Folien zeichnen sich zwar durch eine gute Optik, jedoch durch eine umso schlechtere Herstellbarkeit aus.

In der DE-A 2 353 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Strecken in senkrecht zueinander verlaufenden Richtungen biaxial orientiert und den Film thermofixiert. Nachteilig an dem Verfahren ist, dass das bei der Herstellung der Folie anfallende Folienverschnittmaterial, das in der Fachsprache als Regenerat bezeichnet wird (im Wesentlichen ein Gemisch aus Polyesterrohstoff und Ethylen oder Propylen-Mischpolymer), nicht mehr für den Herstellprozess eingesetzt werden kann, weil davon die Folie gelb wird. Das Verfahren ist damit aber unwirtschaftlich, und die mit Regenerat produzierte Folie konnte sich am Markt nicht durchsetzen. Bei Erhöhung der Menge an Mischpolymerisat im Polyester verliert die Folie ihren milchigen Charakter und wird weiß mit hoher Opazität.

Die ältere EP-A 1 068 949 beschreibt weiße, biaxial orientierte Polyesterfolien, die zumindest eine Schicht umfassen, die ein Cycloolefincopolymer in einer Konzentration von 2 bis 60 Gew.-%, bezogen auf die Schicht, enthält. Die Glasübergangstemperatur des Cycloolefincopolymeren liegt im Bereich von 70 bis 270 °C. Die Folie hat eine Opazität von größer 55 %.

Aufgabe der vorliegenden Erfindung ist es, eine milchig durchscheinende, biaxial orientierte Polyesterfolie bereitzustellen, die sich durch eine verbesserte Herstellbarkeit, d.h. geringe Herstellkosten, auszeichnet. Insbesondere soll gewährleistet sein, dass das bei dem Herstellprozess immanent anfallende Verschnittmaterial (Regenerat) in einer Menge von 10 bis 70 Gew.-%, bezogen auf das Gesamtgewicht der Folie, wieder für den Herstellprozess eingesetzt werden kann, ohne dass dabei die physikalischen und optischen Eigenschaften der mit Regenerat hergestellten Folie nennenswert negativ beeinflusst werden. Insbesondere soll durch die Regeneratzugabe keine nennenswerte Gelbfärbung der Folie auftreten.

Diese Aufgabe wird erfindungsgemäß durch eine milchig durchscheinende, biaxial orientierte Polyesterfolie umfassend mindestens eine Schicht in der Weise gelöst, dass zumindest diese Schicht ein Cycloolefincopolymer (COC), enthaltend Einheiten aus der Gruppe Norbonen, Dimethyloctahydronaphthalin, Cyclopenten, (5-methyl)norbonen mit einer Glasübergangstemperatur im Bereich von 110 bis 220 °C, in einer Menge von 01, bis 4,5 Gew.-%, bezogen auf das Gewicht dieser Schicht, enthält und dass die Folie eine Opazität im Bereich von 5 bis 50 % aufweist.

In Ausgestaltung der Erfindung weist die milchig durchscheinende Folie einen Weißgrad im Bereich von 15 bis 110 %, vorzugsweise von 20 bis 110 %, insbesondere von 25 bis 90 % auf.

Die Opazität der milchig durchscheinenden Folie liegt zweckmäßigerweise im Bereich von 10 bis 50 %, insbesondere von 15 bis 45 %. Des Weiteren besitzt sie eine Transparenz im Bereich von 45 bis 95 %, vorzugsweise von 47 bis 93 %, insbesondere von 49 bis 91 %.

Je nach Herstellbedingungen kann die erfindungsgemäße Folie eine glänzende (metallisch erscheinende) Oberfläche oder eine perlmuttartige (matt oder samtartig erscheinende) Oberfläche aufweisen. Infolgedessen erstrekken sich die Glanzwerte der erfindungsgemäßen Folie über einen breiten Bereich von 10 bis 200, vorzugsweise von 12 bis 195, besonders bevorzugt von 15 bis 190.

Zur Erzielung des gewünschten Weißgrades, der gewünschten Opazität und der angestrebten Transparenz der erfindungsgemäßen Folie soll die Menge an COC in der Basisschicht nicht größer als 5 Gew.-% sein, andernfalls ist der Weißgrad größer als 110 %, Die Opazität größer als 55 % und die Transparenz sinkt unter 45 %.

Weiterhin ist es günstig, wenn die Glasübergangstemperatur des eingesetzten COCs größer als 70 °C ist. Andernfalls, wenn die Glasübergangstemperatur $T_g$ des eingesetzten COCs kleiner als 70 °C ist, ist das Rohstoffgemisch schlecht verarbeitbar, weil es sich nur noch schlecht extrudieren läßt. Der gewünschte Weißgrad wird nicht mehr erreicht und das eingesetzte Regenerat führt zu einer Folie, die zu einer erhöhten Gelbfärbung neigt. Ist andererseits die Glasübergangstemperatur $T_g$ des ausgewählten COCs größer als 270 °C, dann wird sich die Rohstoffmischung im Extruder nicht mehr ausreichend homogenisieren lassen. Dies hat dann eine Folie mit unerwünscht inhomogenen Eigenschaften zur Folge.

In der bevorzugten Ausführungsform der erfindungsgemäßen Folie liegt die Glasübergangstemperatur $T_g$ der verwendeten COCs in einem Bereich von 90 bis 250°C und in der besonders bevorzugten Ausführungsform in einem Bereich von 110 bis 220 °C.

Überraschender Weise wurde gefunden, dass durch den Zusatz eines COCs in der vorstehend beschriebenen Weise eine milchig durchscheinende Folie hergestellt werden kann.

Entsprechend der Menge und der Art des zugegebenen COCs kann der Weißgrad, die Opazität und die Transparenz der Folie exakt eingestellt und den jeweiligen Anforderungen angepasst werden. Durch diese Maßnahme ist es möglich, auf andere milchig machende Additive weitgehend zu verzichten. Geradezu sensationell war die Feststellung, dass das Regenerat keinerlei Neigung zur Gelbfärbung zeigt, wie dies bei dem Einsatz üblicher polymerer Additive als Trübungsmittel nach dem Stand der Technik beobachtet wird.

Alle diese beschriebenen Merkmale waren nicht vorhersehbar. Dies umso mehr, da COCs zwar offensichtlich mit Polyethylenterephthalat weitgehend inkompatibel sind, bekanntlich aber mit ähnlichen Streckverhältnissen und Strecktemperaturen orientiert werden wie Polyethylenterephthalat. Unter diesen Voraussetzungen hätte der Fachmann erwartet, dass bei diesen Herstellbedingungen keine milchig durchscheinende Folie produziert werden kann.

In den bevorzugten und den besonders bevorzugten Ausführungsformen zeichnet sich die erfindungsgemäße Folie durch einen hohen/bzw. durch einen besonders hohen metallischen oder perlmuttartigen Glanz aus, wobei die Farbänderung der Folie durch die Regeneratzugabe äußerst gering bleibt.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht beidseitig COC-haltige Zwischenschichten. In einer weiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, die 50 bis 100 %, vorzugsweise 70 bis 90 %, der Gesamtfoliendicke ausmacht. Die Deckschichten sind die Schichten, welche die äußeren Schichten der Folie bilden.

Die jeweilige Ausführungsform der Erfindung ist eine milchig durchscheinende Folie. Darunter werden im Sinne der vorliegenden Erfindung solche Folien verstanden, deren Lichtdurchlässigkeit nach ASTM-D 1003-77 im Bereich von 45 bis 95 % liegt, vorzugsweise von 47 bis 93 %, besonders bevorzugt von 49 bis 91 %.

Die COC-haltige Schicht (die Basisschicht) der erfindungsgemäßen Folie enthält einen Polyesterrohstoff, vorzugsweise ein Polyesterhomopolymeres, ein COC sowie gegebenenfalls weitere zugesetzte Additive in jeweils wirksamen Mengen. Im allgemeinen enthält diese Schicht mindestens 20 Gew.-%, vorzugsweise 40 bis 98 Gew. -%, insbesondere 70 bis 96 Gew. -%, Polyesterrohstoff, bezogen auf das Gewicht der Schicht.

Die Basisschicht der Folie enthält einen thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (=Polyethylen-2,6-naphthalat, PEN), aus 1,4-Bis-hydroximethyl-cyclohexan und Terephthalsäure (=Poly-1,4-cyclohexandimethylenterephthalat, PCDT) sowie aus Ethylenglykol, Naphthalin-2,6-dicarbonsäure und Biphenyl-4,4'-dicarbonsäure (=Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'dicarbonsäuren (insbesondere Biphenyl-4,4'-dicarbonsäure), Diphenylacetylen-x,x'dicarbonsäuren (insbesondere Diphenylacetylen-4,4'-dicarbonsäure) oder Stilben-x,x'dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein

üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht bzw. die Folie bei einschichtigen Ausführungsformen ein Cycloolefincopolymeres (COC) in einer Menge von maximal 5,0 Gew.-%, bevorzugt im Bereich von 0,1 bis 4,5 Gew.-%, besonders bevorzugt von 0,2 bis 4,0 Gew.-%, bezogen auf das Gewicht der Schicht bzw. bezogen auf das Gewicht der Folie bei einschichtigen Ausführungsformen. Es ist wesentlich für die vorliegende Erfindung, dass das COC mit dem Polyethylenterephthalat nicht verträglich ist und mit diesem keine homogene Mischung in der Schmelze bildet.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefinen der Formeln I, II, III, IV, V oder VI aufgebaut sind:

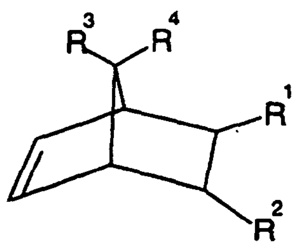

(I)

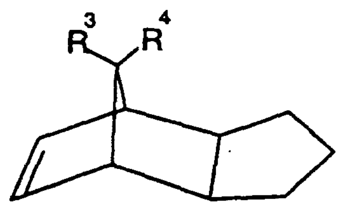

(II)

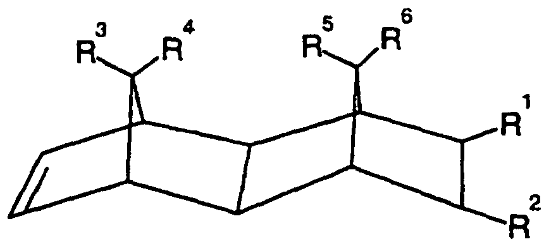

(III)

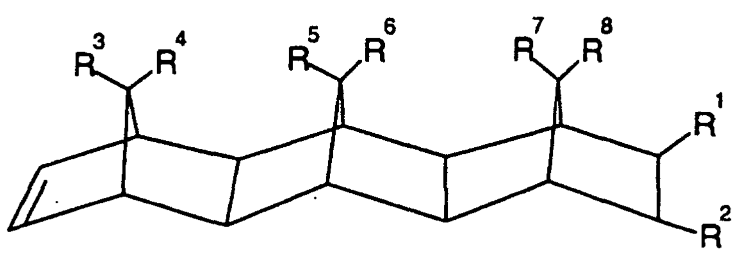

(IV)

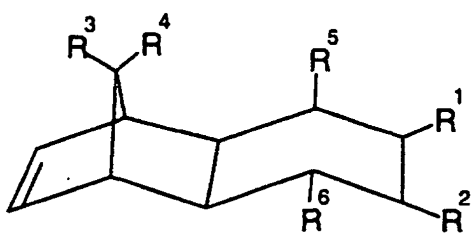

(V)

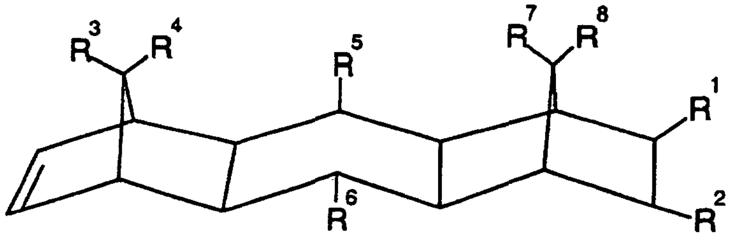

(VI)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die COCs 0 bis 45 Gew.-%, bezogen auf die Gesamtmasse des Cycloolefinpolymeres, polymerisierte Einheiten mindestens eines monocyclischen Olefins der Formel VII enthalten:

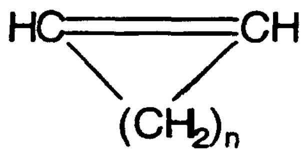

(VII)

Hierin ist n eine Zahl von 2 bis 10.

Gegebenenfalls können die COCs 0 bis 99 Gew.-%, bezogen auf die Gesamtmasse an COC, polymerisierte Einheiten eines acyclischen Olefins der Formel VIII enthalten:

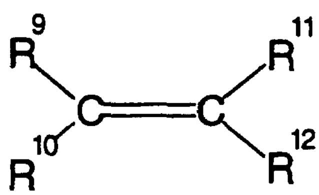

(VIII)

Hierin sind $R^9$, $R^{10}$, $R^{11}$, und $R^{12}$ gleich oder verschieden und bedeuten ein Wasserstoffatom oder $C_1$-$C_{10}$-Kohlenwasserstoffreste, z.B. einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I bis VI aufgebaut. Diese Cycloolefin-Polymere sind für die Zwecke der vorliegenden Erfindung weniger geeignet. Für die Zwecke der vorliegenden Erfindung sind Cycloolefincopolymerisate (COC) geeignet, welche mindestens ein Cycloolefin der Formeln I bis VI und acyclische Olefine der Formel VIII als Comonomer enthalten. Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen COCs.

Unter den vorstehend beschriebenen COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch COCs, die polymerisierte Einheiten acyclischer Olefine, insbesondere Ethylen, enthalten. Wiederum besonders bevorzugt sind Norbornen/Ethylen- und Tetracyclododecen/Ethylen-Copolymere, welche 5 bis 80 Gew.-%, vorzugsweise 10 bis 60 Gew.-%, Ethylen enthalten (bezogen auf das Gewicht des Copolymeren).

Die vorstehend generisch beschriebenen Cycloolefinpolymeren weisen im allgemeinen Glasübergangstemperaturen zwischen -20 °C und 400 °C auf. Für die Erfindung sind COCs verwendbar, die eine Glasübergangstemperatur von größer als 70 °C, vorzugsweise größer als 90 °C und insbesondere größer als 110 °C aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der COCs geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von COCs mit Katalysatoren, basierend auf löslichen Metallocenkomplexen. Auf die in obengenannten Schriften beschriebenen Herstellungsverfahren von COC wird hiermit ausdrücklich Bezug genommen.

Die COCs werden entweder als reines Granulat oder als granuliertes Konzentrat (Masterbatch) in die Folie eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur des COCs.

Für die Zwischenschichten und für die Deckschichten können prinzipiell die gleichen Polymeren verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren, bestehen, welches Ethylen-2,6-naphthalat-Einheiten und Ethylenterephthalat-Einheiten enthalten. Bis zu 30 Mol-% der Polymeren können aus weiteren Comonomeren (z.B. Ethylen-isophthalat-Einheiten.) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Je nach Einsatzgebiet kann die erfindungsgemäße milchig durchscheinende Folie des Weiteren UV-stabilisiert (siehe hierzu WO 98/06575), flammfest oder UV-stabilisiert und flammfest in Kombination sein.

Zu den typischen Flammschutzmitteln gehören Bromverbindungen, Chlorparaffine und andere Chlorverbindungen, Antimontrioxid, Aluminiumtrihydrate, wobei die Halogenverbindungen auf Grund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie Carboxyphosphinsäuren, deren Anhydride und Dimethyl-methylphosphonat.

Typische Antiblockmittel (in diesem Zusammenhang auch als Pigmente bezeichnet) sind anorganische und/ oder organische Partikel, beispielsweise Calciumcarbonat, amorphe Kieselsäure, Talk, Magnesiumcarbonat, Bariumcarbonat, Calciumsulfat, Bariumsulfat, , Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikeln können den Polymeren der einzelnen Schichten der Folie in den jeweils vorteilhaften Mengen, z.B. als glykolische Dispersion während der Polykondensation oder über Masterbatche bei der Extrusion zugegeben werden. Als besonders geeignet haben sich Pigmentkonzehtrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des milchig durchscheinenden Charakters der erfindungsgemäßen Folie kann die Basisschicht oder die anderen zusätzlichen Schichten eine weitere Pigmentierung enthalten. Hierbei hat es sich als besonders günstig erwiesen, als zusätzliche Additive Bariumsulfat mit einer Korngröße von 0,3 bis 0,8 µm, vorzugsweise von 0,4 bis 0,7 µm, gemessen nach der Sedigraphmethode, oder Titandioxid mit einer Korngröße von 0,05 bis 0,3 µm auszuwählen. Die Folie erhält hierdurch ein brillantes Aussehen. Die Menge an Bariumsulfat oder Titandioxid liegt im Bereich von 0,1 bis 25 Gew.-%, vorzugsweise von 0,2 bis 20 Gew.-%, und ganz besonders bevorzugt von 0,3 bis 15 Gew.-%.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 400 µm, wobei 8 bis 300 µm, insbesondere 10 bis 300 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und

liegt bevorzugt im Bereich von 0,1 bis 10 µm, insbesondere von 0,2 bis 5 µm, vorzugsweise von 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise zuerst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell rotierender Walzen. Zum Querverstrecken benutzt man allgemein einen entsprechenden Kluppenrahmen.

Die Verstreckung kann in einer günstigen Ausführungsform auch in einem Simultanstreckrahmen (Simultanstreckung) erfolgen, wobei die Anzahl der Streckschritte beiden Richtungen (MD-Richtung und TD-Richtung) und ihre Abfolge nicht von entscheidender Bedeutung für das Eigenschaftsbild der Folie ist. Günstig sind dabei Strecktemperaturen, die kleiner als 135 °C, besonders günstig kleiner als 130 °C, sind. Die Streckverhältnisse entsprechen denen des herkömmlichen sequentiellen Streckprozesses.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von 150 bis 250 °C gehalten. Anschließend wird die Folie abgekühlt und dann in üblicher Weise aufgewickelt.

Zur Einstellung weiterer gewünschter Eigenschaften kann die Folie chemisch behandelt werden oder auch corona- bzw. flammbehandelt sein. Die Behandlungsintensität ist so gewählt, dass die Oberflächenspannung der Folie im allgemeinen über 45 mN/m liegt.

Ebenso kann die Folie zur Einstellung weiterer Eigenschaften beschichtet werden. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäßen Folie drückt sich durch ihren bestimmten Weißgrad in Kombination mit ihrer bestimmten Opazität bei gleichzeitig bestimmter Transparenz aus.

Ein weiterer besonderer Vorteil der Erfindung liegt darin, dass das bei der Herstellung der Folie immanent anfallende Regenerat in einer Konzentration von 10 bis 70 Gew.-%, bezogen auf das Gesamtgewicht der Folie, wieder für die Folienherstellung verwendet werden kann, ohne dass dabei die physikalischen Eigenschaften der Folie nennenswert negativ beeinflußt werden. Insbesondere wird durch das Regenerat (im wesentlichen aus Polyesterrohstoff und COC bestehend) die Folie nicht undefiniert in der Farbe verändert, was bei den Folien nach dem Stand der Technik der Fall ist.

Darüber hinaus besteht ein Vorteil der Erfindung darin, dass die Herstellkosten der erfindungsgemäßen Folie vergleichbar sind mit herkömmlichen opaken Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich hervorragend zur Verpackung von licht- und/oder luftempfindlichen Nahrungs- und Genußmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen. Eine ganz besonders eindrucksvolle optische Erscheinungsform ergibt sich, wenn die Folie einer Metallisierung unterzogen wird. Dabei kommt der besondere metallische Charakter der Folie besonders augenfällig zum Tragen und kann somit z.B. auch werbewirksam genutzt werden.

Die nachstehende Tabelle (Tabelle 1) fasst die wichtigsten erfindungsgemäßen Folieneigenschaften noch einmal ganz besonders illustrativ zusammen.

**Tabelle 1**

| | Erfindungsgemäßer Bereich | bevorzugt | besonders bevorzugt | Einheit | Messmethode |
|---|---|---|---|---|---|
| **Formulierung** | | | | | |
| Menge an COC in der Basisschicht | ≤ 5 | 0,1 - 4,5 | 0,2 - 4,0 | % | |
| Glasübergangstemp. des COCs | 70 - 270 | 90 - 250 | 110 - 220 | °C | DIN 73 765 |
| **Folieneigenschaften** | | | | | |
| Weißgrad | 15 - 110 | 20 - 100 | 25 - 90 | % | Berger |
| Opazität | 5 - 55 | 10 - 50 | 15 - 45 | % | DIN 53 146 |
| Transparenz | 45 - 95 | 47 - 93 | 49 - 91 | | ASTM-D 1033-77 |
| Glanz | 10 - 200 | 12 - 195 | 15 - 190 | | DIN 67 530 |
| Mittlere Rauhigkeit $R_a$ | 20 - 300 | 25 - 250 | 30 - 200 | nm | DIN 4768, Cut-off von 0,25 mm |

Zur Charakterisierung der Rohstoffe und der Folien wurden die folgenden Meßwerte benutzt:

**SV (DCE), IV (DCE)**

Die Standardviskosität SV (DCE) wird angelehnt an DIN 53726 in Dichloressigsäure gemessen.

Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Oberflächendefekte, homogene Einfärbung**

Die Oberflächendefekte und die homogene Einfärbung werden visuell bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Rauhigkeit**

Die Rauhigkeit $R_a$ der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.

WG = Weißgrad, RY, RZ, RX = entsprechende Reflexionsfaktoren bei Einsatz des Y-, Z-und X-Farbmessfilters. Als Weißstandard wir ein Pressling aus Bariumsulfat (DIN 5033, Teil 9) verwendet. Eine ausführliche Beschreibung ist z.B. in Hansl Loos "Farbmessung","Verlag Beruf und Schule, Itzehoe (1989), beschrieben.

**Lichtdurchlässigkeit (Transparenz)**

Die Lichtdurchlässigkeit wird in Anlehnung an ASTM-D 1033-77 gemessen.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Glasübergangstemperatur**

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Firma DuPont. Die Aufheizgeschwindigkeit betrug 20 K/min und die Einwaage ca. 12 mg. Im ersten Aufheizvorgang wurde der Glasübergang $T_g$ ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

**Beispiel 1** (erfindungsgemäß)

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und

dem Extruder für die Basisschicht B zugeführt. Daneben wurden Chips aus COC der Fa. Ticona: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von etwa 160 °C ebenfalls dem Extruder für die Basisschicht B zugeführt. Der mengenmäßige Anteil des Cycloolefincopolymeren (COC) an der Gesamtfolie betrug 2 Gew.-%.

Es wurde durch Extrusion und anschließende stufenweise Orientierung in Längs- und Querrichtung eine weiße, opake einschichtige Folie und einer Gesamtdicke von 23 µm hergestellt.

Basisschicht B, Mischung aus:

98,0 Gew.-% Polyethylenterephthalat-Homopolymer mit einem SV-Wert von 800
2,0 Gew.-% Cycloolefincopolymeren (COC) der Fa. Ticona, Topas 6015

Die Herstellungsbedingungen in den einzelnen Verfahrensschritten waren:

| | | |
|---|---|---|
| Extrusion | Temperaturen Basis-Schicht | 280 °C |
| | Temperatur der Abzugswalze | 30 °C |
| Längsstreckung | Temperatur | 80 - 125 °C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| | Dauer | 3 s |

Die Folie hatte die geforderten guten Eigenschaften und zeigte das gewünschte Handling und das gewünschte Verarbeitungsverhalten. Die erzielten Eigenschaften derart hergestellter Folien sind in der Tabelle 2 dargestellt.

**Beispiel 2** (erfindungsgemäß)

Im Vergleich zu Beispiel 1 wurde jetzt in die Basisschicht 50 Gew.-% Regenerat dazugegeben. Die Menge an COC in der damit hergestellten Folie betrug wiederum 2 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass kaum eine Gelbverfärbung der Folie sichtbar geworden ist.

Basisschicht B, Mischung aus:

49,0 Gew.-% Polyethylenterephthalat-Homopolymer mit einem SV-Wert von 800
50,0 Gew.-% Regenerat (98 Gew.-% Polyester + 2 Gew.-% Topas 6015)
1,0 Gew.-% Cycloolefincopolymeren (COC) der Fa. Ticona, Topas 6015

**Beispiel 3** (erfindungsgemäß)

Im Vergleich zu Beispiel 1 wurde jetzt eine Folie mit einer Dicke von 96 µm hergestellt. Die Menge an COC in der Folie betrug 1 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass keine Gelbverfärbung der Folie sichtbar geworden ist.

Basisschicht B, Mischung aus:

99,0 Gew.-% Polyethylenterephthalat-Homopolymer mit einem SV-Wert von 800

1,0 Gew.-% Cycloolefincopolymeren (COC) der Fa. Ticona, Topas 6015

**Beispiel 4** (erfindungsgemäß)

Im Vergleich zu Beispiel 3 wurde jetzt in die Basis 50 Gew.-% Regenerat dazugegeben. Die Menge an COC in der Folie betrug wiederum 1 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass kaum eine Gelbverfärbung der Folie sichtbar geworden ist.

Basisschicht B, Mischung aus:

| | |
|---|---|
| 49,5 Gew.-% | Polyethylenterephthalat-Homopolymer mit einem SV-Wert von 800 |
| 50,0 Gew.-% | Eigenregenerat (99 Gew.-% Polyester + 1 Gew.-% Topas 6015) |
| 0,5 Gew.-% | Cycloolefincopolymeren (COC) der Fa. Ticona, Topas 6015 |

**Vergleichsbeispiel 1**

Es wurde Beispiel 1 aus der DE-A 2 353 347 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist. Außerdem ist die Transparenz der Folie viel zu niedrig.

Basisschicht B, Mischung aus:

| | |
|---|---|
| 47,5 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 2,5 Gew.-% | Polypropylen |

**Tabelle 2**

| Beispiel | Dicke der Folie | Schichtaufbau | Additiv zum Polyesterrohstoff | Konzentration des Additivs in Basisschicht | Glasübergangstemperatur des Additivs | Weißgrad | Opazität | Beurteilung des Gelbgrades der Folie | Glanz | Reibung COF | Mittlere Rauhigkeit $R_a$ | |
|---|---|---|---|---|---|---|---|---|---|---|---|---|
| | µm | | | % | °C | % | % | | | | nm | |
| | | | | | | | | | | A-Seite gegen C-Seite | A-Seite | C-Seite |
| B 1 | 23 | B | COC | 2 | 170 | 70 | 40 | ++ | 130 | 0,52 | 120 | |
| B 2 | 23 | B | COC | 2 | 170 | 74 | 40 | + | 128 | 0,50 | 110 | |
| B 3 | 96 | B | COC | 1 | 170 | 72 | 38 | ++ | 140 | 0,42 | 100 | |
| B 4 | 96 | B | COC | 1 | 170 | 70 | 38 | + | 145 | 0,35 | 98 | |
| VB 1 | 155 | B | Polypropylen | 5 | -10 | 80 | 70 | - | 46 | 0,45 | 410 | |

Zeichenerklärung für den Gelbgrad der produzierten Folien:

++ : keine Gelbfärbung ist zu erkennen

\+ : geringe Gelbfärbung ist zu erkennen

\- : deutliche Gelbfärbung ist zu erkennen

**Patentansprüche**

1. Milchig durchscheinende biaxial orientierte Polyesterfolie umfassend mindestens eine Schicht, **dadurch gekennzeichnet, dass** zumindest diese Schicht ein Cycloolefincopolymer (COC), enthaltend Einheiten aus der Gruppe

Norbonen, Dimethyloctahydronaphthalin, Cyclopenten, (5-methyl)norbonen, mit einer Glasübergangstemperatur im Bereich von 110 bis 220 °C, in einer Menge von 0,1 bis 4,5 Gew.-%, bezogen auf das Gewicht dieser Schicht, enthält und dass die Folie eine Opazität im Bereich von 5 bis 50 % aufweist.

**2.** Milchig durchscheinende Polyesterfolie nach Anspruch 1, **dadurch gekennzeichnet, dass** die Schicht das COC in einer Menge im Bereich von 0,2 bis 4,0 Gew.-%, bezogen auf das Gewicht der Schicht, enthält.

**3.** Milchig durchscheinende Polyesterfolie nach einem der Ansprüche 1 oder 2, **dadurch gekennzeichnet, dass** die Folie einen Weißgrad im Bereich von 15 bis 110 % aufweist.

**4.** Milchig durchscheinende Polyesterfolie nach einem der Ansprüche 1 bis 3, **dadurch gekennzeichnet, dass** die Folie eine Transparenz im Bereich von 45 bis 95 % aufweist.

**5.** Milchig durchscheinende Polyesterfolie nach einem der Ansprüche 1 bis 4, **dadurch gekennzeichnet, dass** die Schicht 0,5 bis 25 Gew.-% weiterer vakuoleniniziierender und/oder weißer Füllstoffe und/oder Pigmente enthält, jeweils bezogen auf das Gewicht der Schicht.

**6.** Milchig durchscheinende Polyesterfolie nach einem der Ansprüche 1 bis 5, **dadurch gekennzeichnet, dass** auf der COC-haltigen Schicht wenigstens eine Deckschicht angeordnet ist.

**7.** Milchig durchscheinende Polyesterfolie nach Anspruch 6, **dadurch gekennzeichnet, dass** zwischen der COC-haltigen Schicht und der Deckschicht eine Zwischenschicht angeordnet ist.

**8.** Milchig durchscheinende Polyesterfolie nach einem der Ansprüche 1 bis 7, **dadurch gekennzeichnet, dass** die Folie einschichtig ist und aus der COC-haltigen Schicht besteht.

**9.** Verfahren zum Herstellen einer milchig durchscheinenden Polyesterfolie nach einem der Ansprüche 1 bis 8, bei dem die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt, die biaxial gestreckte Folie thermofixiert und gegebenenfalls an wenigstens einer Oberflächenschicht corona- oder flammbehandelt wird, **dadurch gekennzeichnet, dass** die biaxiale Verstreckung sequentiell durchgeführt wird, wobei zuerst in Längsrichtung und anschließend in Querrichtung verstreckt wird und wobei die Temperatur bei der Längsstreckung in einem Bereich von 80 bis 130 °C und die Temperatur bei der Querstreckung in einem Bereich von 90 bis 150 °C und das Längsstreckverhältnis im Bereich von 2,5:1 bis 6:1, bevorzugt von 3:1 bis 5,5:1, das Querstreckverhältnis im Bereich von 3,0:1 bis 5,0:1, bevorzugt von 3,5:1 bis 4,5:1, eingestellt wird.

**10.** Verfahren zum Herstellen einer milchig durchscheinenden Polyesterfolie nach einem der Ansprüche 1 bis 8, bei dem die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt, die biaxial gestreckte Folie thermofixiert und gegebenenfalls an wenigstens einer Oberflächenschicht corona- oder flammbehandelt wird, **dadurch gekennzeichnet, dass** die biaxiale Verstreckung simultan durchgeführt wird und in einem Simultanstreckrahmen erfolgt, wobei die Strecktemperaturen in einem Bereich von kleiner/gleich 135 °C, bevorzugt kleiner/gleich 130 °C, eingestellt werden.

**11.** Verfahren nach Anspruch 9 oder 10, **dadurch gekennzeichnet, dass** die Folie nach der Verstreckung zur Thermofixierung über eine Zeitdauer von 0,1 bis 10 s bei einer Temperatur im Bereich von 150 bis 250 °C gehalten und anschließend abgekühlt und dann aufgewickelt wird.

**12.** Verfahren nach einem der Ansprüche 9 bis 11, **dadurch gekennzeichnet, dass** die Folie zur Einstellung weiterer gewünschter Eigenschaften auf wenigstens einer Oberfläche chemisch behandelt oder corona- bzw. flammbehandelt wird, wobei die Behandlungsinterisität so eingestellt wird, dass die Oberflächenspannung der Folie über 45 mN/m liegt.

**13.** Verfahren nach einem der Ansprüche 9 bis 12, **dadurch gekennzeichnet, dass** die Folie zur Einstellung weiterer Eigenschaften mit einer haftvermittelnden oder antistatischen oder schlupfverbessernden oder dehäsiv wirkenden zusätzlichen Beschichtung versehen wird, wobei die zusätzliche Beschichtung über in-line coating mittels wässriger Dispersionen nach der Längsstreckung und vor der Querverstreckung auf die Folie aufgebracht wird.

**14.** Verwendung einer milchig durchscheinenden Folie nach einem der Ansprüche 1 bis 8 zur Verpackung von licht- und/oder luftempfindlichen Nahrungs- und Genussmitteln oder für den Einsatz im industriellen Bereich, insbesondere bei der Herstellung von Prägefolien oder als Etikettenfolie, oder für Bildaufzeichnungspapiere, Druckbögen oder magnetische Aufzeichnungskarten oder für die Metallisierung.

## Claims

**1.** A milky-translucent, biaxially oriented polyester film encompassing at least one layer, wherein at least this layer comprises a cycloolefin copolymer (COC) containing units selected from the group consisting of norbornene, dimethyloctahydronaphthalene, cyclopentene, and 5-methylnorbornene, with a glass transition temperature in the range from 110 to 220 °C, in an amount of from 0.1 to 4.5 % by weight, based on the weight of this layer, and wherein the opacity of the film is within the range from 5 to 50 %.

**2.** The milky-translucent polyester film as claimed in claim 1 , wherein the layer comprises the COC in an amount in the range from 0.2 to 4.0 % by weight, based on the weight of the layer.

**3.** The milky-translucent polyester film as claimed in any of claims 1 or 2, wherein the whiteness of the film is in the range from 15 to 110 %.

**4.** The milky-translucent polyester film as claimed in any of claims 1 to 3, wherein the transparency of the film is in the range from 45 to 95 %.

**5.** The milky-translucent polyester film as claimed in any of claims 1 to 4, wherein the layer comprises 0.5 to 25 % by weight of other vacuole-initiating and/or white fillers and/or pigments, in each case based on the weight of the layer.

**6.** The milky-translucent polyester film as claimed in any of claims 1 to 5, wherein at least one outer layer has been arranged on the COC-containing layer.

**7.** The milky-translucent polyester film as claimed in claim 6, wherein an intermediate layer has been arranged between the COC-containing layer and the outer layer.

**8.** The milky-translucent polyester film as claimed in any of claims 1 to 7, which has one layer and is composed of the COC-containing layer.

**9.** A process for producing a milky-translucent polyester film as claimed in any of claims 1 to 8, in which the melt(s) corresponding to the single-layer film or to the individual layers of the film is/are extruded/coextruded through a flat-film die, the resultant film is drawn off on one or more rolls for solidification, the film is then biaxially stretched, and the biaxially stretched film is heat-set and, if desired, corona- or flame-treated on at least one surface, which comprises carrying out the biaxial orientation sequentially, first orienting longitudinally and then transversely, the temperature during the longitudinal stretching being in the range from 80 to 130 °C and the temperature during the transverse stretching being in the range from 90 to 150 °C, and the longitudinal stretching ratio being in the range from 2.5:1 to 6:1, preferably from 3:1 to 5.5:1, and the transverse stretching ratio being in the range from 3.0:1 to 5.0:1, preferably from 3.5:1 to 4.5:1.

**10.** The process for producing the milky-translucent polyester film as claimed in any of claims 1 to 8, in which the melt (s) corresponding to the single-layer film or to the individual layers of the film is/are extruded/coextruded through a flat-film die, the resultant film is drawn off on one or more rolls for solidification, the film is then biaxially stretched, and the biaxially stretched film is heat-set and, if desired, corona- or flame-treated on at least one surface, which comprises carrying out the biaxial orientation simultaneously and in a simultaneous stretching frame, the stretching temperatures being ≤ 135 °C, preferably ≤ 130 °C.

**11.** The process as claimed in claim 9 or to, wherein, for heat-setting, the oriented film is kept for from 0.1 to 10 s at a temperature in the range from 150 to 250 °C, and is then cooled and then wound up.

12. The process as claimed in any of claims 9 to 11, wherein, to establish other desired properties, at least one surface of the film is chemically treated or corona- or flame-treated, the intensity of the treatment being adjusted so that the surface tension of the film is above 45 mN/m.

13. The process as claimed in any of claims 9 to 12, wherein, to establish other properties, the film is coated with an additional coating which has adhesion-promoting, antistatic, slip-improving or release action, this additional coating being applied to the film by in-line coating using aqueous dispersions after longitudinal stretching and before transverse stretching.

14. The use of the milky-translucent film as claimed in any of claims 1 to 8 for packing foods or other consumable items which are sensitive to light and/or to air, or for use in industry, in particular for producing hot-stamping foils or as a label film, or for image-recording papers, printed sheets or magnetic recording cards, or for metallization.

## Revendications

1. Film polyester orienté biaxialement, translucide laiteux, comprenant au moins une couche, **caractérisé en ce que** au moins ladite couche contient un copolymère cyclooléfinique (COC), contenant des unités choisies dans le groupe de norbornène, Diméthyloctahydronaphtaline, cyclopentène, (5-méthyl)norbornène, avec une température de transition vitreuse dans la plage de 110 à 220°C, en une quantité de 0,1 à 4,5 % en poids par rapport au poids de ladite couche, et **en ce que** le film présente une opacité dans la plage de 5 à 50 %.

2. Film polyester translucide laiteux selon la revendication 1, **caractérisé en ce que** la couche contient le (COC) en une quantité de 0,2 à 4,0 % en poids par rapport au poids de la couche.

3. Film polyester translucide laiteux selon la revendication 1 ou 2, **caractérisé en ce que** le film présente un degré de blancheur dans la plage de 15 à 110%.

4. Film polyester translucide laiteux selon l'une des revendications 1 à 3, **caractérisé en ce que** le film présente une transparence dans la plage de 45 à 95 %.

5. Film polyester translucide laiteux selon l'une des revendications 1 à 4, **caractérisé en ce que** la couche contient 0,5 à 25 % en poids d'autres charges initiant des vides et/ou matières de charge blanches et/ou pigments, respectivement par rapport au poids de la couche.

6. Film polyester translucide laiteux selon l'une quelconque des revendications 1 à 5, **caractérisé en ce que** est disposé sur la couche à teneur en COC au moins une couche de couverture.

7. Film polyester translucide laiteux selon la revendication 6, **caractérisé en ce que** est disposé entre la couche à teneur en COC et la couche de couverture une couche intermédiaire.

8. Film polyester translucide laiteux selon l'une quelconque des revendications 1 à 7, **caractérisé en ce que** le film est monocouche et est composé de la couche à teneur COC.

9. Procédé de fabrication d'un film polyester selon l'une quelconque des revendications 1 à 8, dans lequel le ou les matières en fusion correspondant au film monocouche ou aux couches respectives du film sont extrudées ou coextrudées à travers une buse plate, le film ainsi obtenu est embobiné sur un ou plusieurs rouleaux pour stabilisation, le film est ensuite étiré de manière biaxiale, le film biaxialement étiré est thermofixé et le cas échéant soumis à un traitement corona ou à la flamme sur au moins une couche superficielle, **caractérisé en ce que** l'étirage biaxial est réalisé de manière séquentielle, d'abord en direction longitudinale et ensuite en direction transversale et la température lors de l'étirage longitudinal est réglée dans la plage de 80 à 130°C et la température lors de l'étirage transversal est réglée dans la plage de 90 à 150°C et le ratio d'étirage longitudinal est réglé dans la plage de 2,5 : 1 à 6 : 1, de préférence de 3 : 1 à 5,5 : 1, le ratio d'étirage transversal est réglé dans la plage de 3,0 : 1 à 5,0 : 1, de préférence de 3,5 : 1 à 4,5 : 1.

10. Procédé de fabrication d'un film polyester translucide laiteux selon l'une quelconque des revendications 1 à 8, dans lequel le ou les matières en fusion correspondant au film monocouche ou aux couches respectives du film sont extrudées ou coextrudées à travers une buse plate, le film ainsi obtenu est embobiné sur un ou plusieurs

rouleaux pour stabilisation, le film est ensuite étiré de manière biaxiale, le film étiré biaxialement est thermofixé et le cas échéant soumis à un traitement corona ou à la flamme sur au moins une couche superficielle, **caractérisé en ce que** l'étirage est réalisé de manière simultanée et dans un cadre pour étirage simultané, les températures d'étirage étant réglée dans une plage inférieure ou égale à 135°C, de préférence inférieure ou égale à 130°C.

**11.** Procédé selon la revendication 9 ou 10, **caractérisé en ce que** le film est maintenu après l'étirage pour la thermofixation à une température dans la plage de 150 à 250°C pour une durée de 0,1 à 10 secondes et ensuite refroidi puis embobiné.

**12.** Procédé selon l'une des revendications 9 à 11, **caractérisé en ce que** le film est soumis à un traitement chimique ou par corona ou à la flamme sur au moins une surface afin de régler d'autres propriétés souhaitées, l'intensité du traitement étant réglée de façon à ce que la tension superficielle du film soit supérieure à 45 mN/m.

**13.** Procédé selon l'une quelconque des revendications 9 à 12, **caractérisé en ce que** le film est muni d'un revêtement supplémentaire de couplage ou antistatique ou améliorant la friction ou à effet déhésif, le revêtement supplémentaire étant appliqué sur le film par coating en ligne au moyen de dispersions aqueuses après l'étirage longitudinal et avant l'étirage transversal.

**14.** Utilisation d'un film translucide laiteux selon l'une quelconque des revendications 1 à 8, pour l'emballage de denrées alimentaires et d'agrément ou pour une utilisation dans le domaine industriel, en particulier lors de la fabrication de feuilles grainées ou à titre de film d'étiquette, ou pour des papiers d'enregistrement d'images, de feuilles à imprimer ou des cartes d'enregistrement magnétiques ou pour la métallisation.